# EUROPÄISCHE PATENTSCHRIFT

(11) **EP 1 923 181 B1**
(45) Veröffentlichungstag und Bekanntmachung des Hinweises auf die Patenterteilung: **01.06.2011**
(21) Anmeldenummer: 07021036.4
(22) Anmeldetag: 26.10.2007
(51) Int. Cl.: B26D 7/18

(54) **Druckvorrichtung zur Klemmung von Teilen**
Pressure device for clamping parts
Dispositif de pression destiné au serrage de pièces

(30) Priorität: 20.11.2006 DE 202006017644 U
(43) Veröffentlichungstag der Anmeldung: 21.05.2008
(73) Patentinhaber: Karl Marbach GmbH & Co. KG, 74080 Heilbronn (DE)
(72) Erfinder: Sinn, Rolf, 74211 Leingarten (DE)
(74) Vertreter: Hano, Christian

(56) Entgegenhaltungen:
- DE-A1- 4 436 201
- DE-U1- 20 307 009
- FR-A- 2 787 550
- US-A1- 2005 070 420

## Beschreibung

Die Erfindung betrifft eine Druckvorrichtung zur Klemmung von Teilen, insbesondere in Stanzautomaten, mit den Merkmalen des Oberbegriffs des Patentanspruchs 1.

Derartige Druckvorrichtungen werden in Stanzautomaten für Kartonagen zur Klemmung von Kartonteilen während des Trennprozesses von Ausbrechteilen angewandt. Die auszubrechenden Teile werden in einem Kartonbogen zunächst gestanzt und nach einer Klemmung des Kartonbogens zwischen einer Unterlegeplatte mit entsprechend geformten Öffnungen und der Druckvorrichtung aus den Kartonbogen durch eine Stoßbelastung herausgebrochen.

Eine entsprechende Druckvorrichtung ist aus der DE 203 07 009 U1 bekannt. Bei dieser Druckvorrichtung ist die Schubstange gegenüber der Trägerplatte unter Einwirkung einer vorgespannten elastischen Vorrichtung vorgespannt. Das Führungselement wird von einem Biegeteil gebildet, das wenigstens einen Steg und zwei sich von diesem Steg in die gleiche Richtung erstreckende Schenkel aufweist. In den Schenkeln ist jeweils eine Führungsöffnung für die Schubstange vorgesehen. Zur Befestigung des Biegeteils an der Trägerplatte wird das Biegeteil mit einem Schenkel auf der Trägerplatte verschraubt. Diese Verschraubung ist relativ zeitaufwändig, wodurch die Rüstzeit erhöht wird.

Die US 2005/070420 A1 aus der die Merkmale des Oberbegriffs des Anspruch 1 bekannt sind, beschreibt eine Druckvorrichtung zur Klemmung von Teilen mit einer Trägerplatte, an der wenigstens ein Führungselement anbringbar ist, in dem eine vorgespannte Schubstange längs ihrer Achse verschiebbar geführt ist, wobei die Schubstange gegenüber dem Führungselement vorgespannt ist und das Führungselement einen zylindrischen Grundkörper aufweist, An dem Grundkörper sind vier sich nach unten und parallel zur Achse der Schubstange angeordnete Klauen mit Widerhaken angeordnet, die durch Öffnungen in der Trägerplatte hindurchgehen, wobei die Widerhaken an der Unterseite der Trägerplatte anliegen.

Der Erfindung liegt die Aufgabe zugrunde, mit konstruktiv einfachen Mitteln eine Druckvorrichtung zur Klemmung von Teilen zu schaffen, bei der das Führungselement schnell an der Trägerplatte montiert werden kann.

Diese Aufgabe wird durch eine Druckvorrichtung mit den Merkmalen des Patentanspruchs 1 gelöst. Vorteilhafte Weiterbildungen der erfindungsgemäßen Druckvorrichtung sind Gegenstand der Patentansprüche 2 bis 4.

Die Ausbildung der erfindungsgemäßen Druckvorrichtung ermöglicht eine schnelle Montage und Demontage der Druckvorrichtung an der Trägerplatte. Die Druckvorrichtung ist nur mit dem zylindrischen Grundkörper in die Durchgangsöffnungen der Trägerplatte einzustecken und anschließend um 45° in Art eines Bajonettverschlusses zu verdrehen. Das Führungselement kann mit einfachem Werkzeug oder auch rein manuell mit den Fingern montiert werden.

Durch die an den Radialvorsprüngen sich in Richtung des Umfangsflansches erstreckenden elastischen Rastnasen und die auf einer Seite der Trägerplatte zwischen den Radialausnehmungen ausgebildeten Rasteinsparungen, in die die Rastnasen eingreifen können, wird eine Verdrehsicherung geschaffen, die ein ungewolltes Lösen des Führungselements in der Trägerplatte verhindert.

Darüber hinaus wird durch den angrenzend an den Umfangsflansch angeordneten elastischen Ring auf dem Grundkörper ein Höhenausgleich zwischen dem Umfangsflansch und der Trägerplatte beim Verdrehen des Führungselements sichergestellt.

Für eine manuelle Anbringung des Führungselements an der Trägerplatte ist vorzugsweise ein ergonomisch geformter Drehgriff an der dem Grundkörper abgewandten Seite des Umfangsflansches vorgesehen. Der Drehgriff kann aber auch auf der dem Grundkörper abgewandten Seite der Radialvorsprünge vorgesehen sein.

Eine einfache Montage mittels eines Werkzeugs ist dann möglich, wenn in dem Umfangsflansch Axialbohrungen diametral gegenüberliegend ausgebildet sind, die zur Aufnahme von Stiften eines drehbaren Montagwerkzeugs dienen.

Ein Ausführungsbeispiel der Erfindung wird nachstehend anhand der Zeichnungen näher erläutert. Es zeigen
- Fig. 1: eine Draufsicht auf eine Trägerplatte,
- Fig. 2: eine perspektivische Ansicht eines Führungselements,
- Fig. 3: eine Querschnittsansicht durch eine Druckvorrichtung mit Trägerplatte und Führungselement,

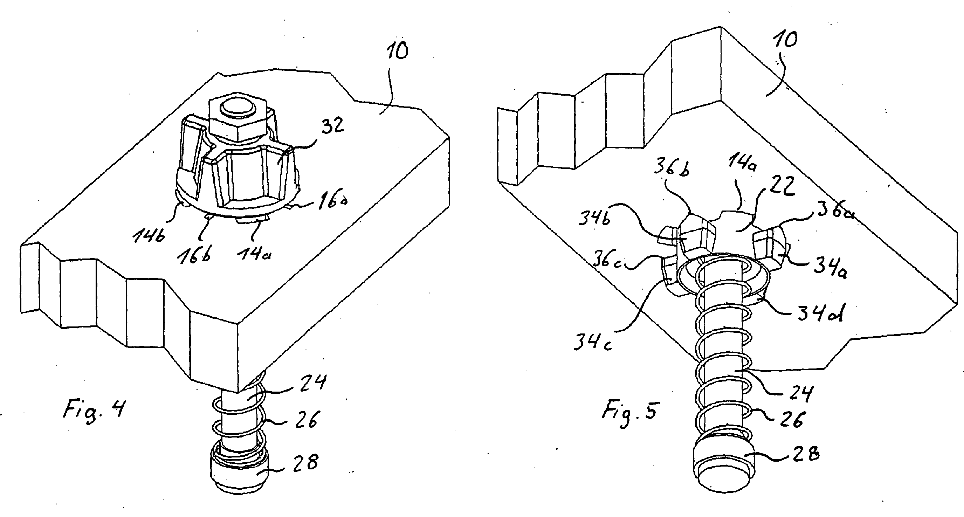

- Fig. 4: eine schematische Draufsicht auf die Druckvorrichtung von Fig. 3,
- Fig. 5: eine schematische Unteransicht der Druckvorrichtung von Fig. 3.

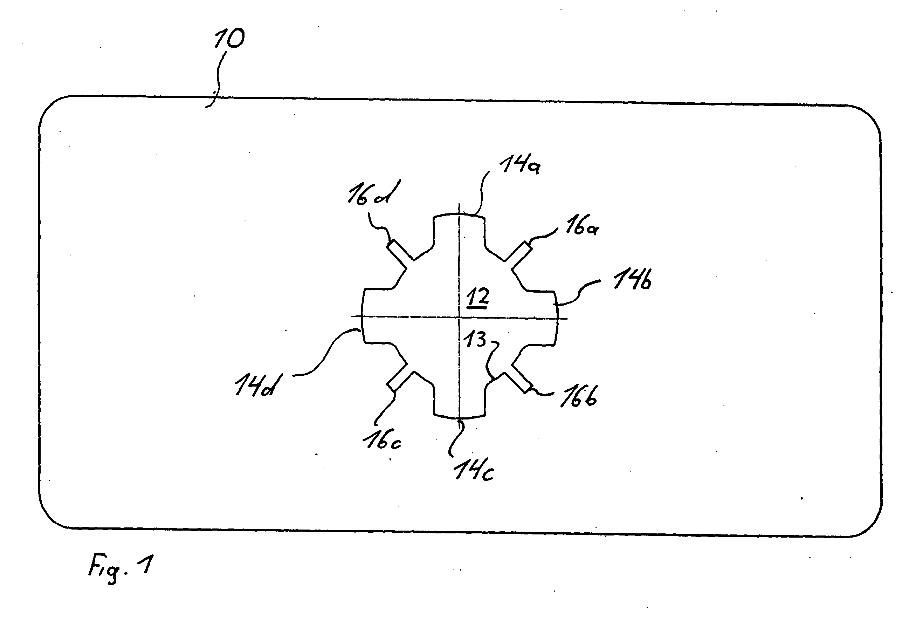

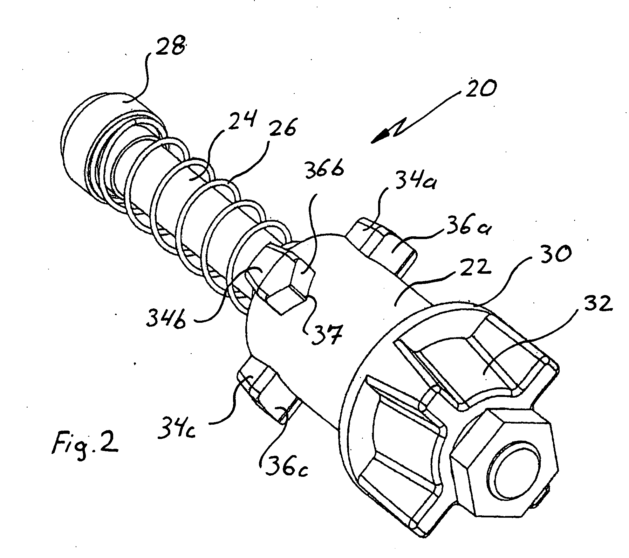

Die in Fig. 1 gezeigte Trägerplatte 10 ist aus Holz hergestellt und weist zur Aufnahme eines Führungselementes 20 (Fig. 2) eine Durchgangsöffnung 12 mit einer insgesamt zylindrischen Innenfläche 13 auf. Von der Innenfläche 13 erstrecken sich in einem Winkelabstand von 90° Radialausnehmungen 14a, 14b, 14c, 14d nach außen. In der Mitte zwischen benachbarten Radialausnehmungen 14a, 14b, 14c, 14d ist jeweils ein schmaler Radialschlitz 16a, 16b, 16c, 16d ausgebildet, der sich ebenfalls in Radialrichtung erstreckt. Sowohl die Radialausnehmungen 14a, 14b, 14c, 14d als auch die Radialschlitze 16a, 16b, 16c, 16d gehen senkrecht zu den Oberflächen der Trägerplatte 10 durch die Trägerplatte 10 hindurch.

Das in Fig. 2 gezeigte Führungselement 20 umfasst einen zylindrischen Grundkörper 22, dessen Außendurchmesser dem Innendurchmesser der Durchgangsöffnung 12 entspricht. Am in Fig. 2 unteren Ende des Grundkörpers 22 sind Radialvorsprünge 34a, 34b, 34c, 34d in einem Winkelabstand von 90° in einer Radialebene, d.h. in einer senkrecht zur Längsachse des Grundkörpers 22 verlaufenden Ebene angeordnet. Das untere Ende der Radialvorsprünge 34a, 34b, 34c, 34d ist bündig mit der unteren Stirnseite des Grundkörpers 22. In dem Grundkörper 22 ist eine Schubstange 24 verschieblich geführt, die von einer Vorspannfeder 26 umgeben wird, die sich mit ihrem unteren Ende an einem am unteren Ende der Schubstange 24 vorgesehenen Bund 28 abstützt und mit ihrem anderen Ende an einem innerhalb des Grundkörpers 22 vorgesehenen Bund (nicht gezeigt) anliegt.

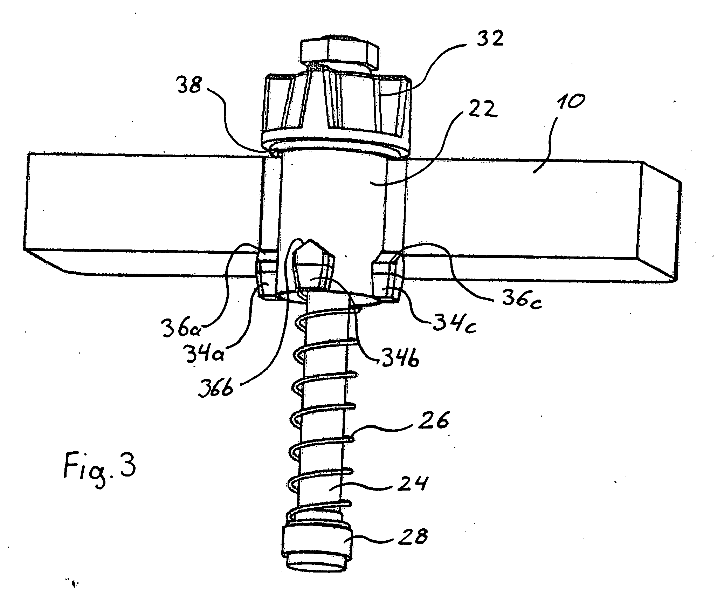

Die Radialvorsprünge 34a, 34b, 34c, 34d sind im Wesentlichen quaderförmig ausgebildet und weisen auf ihrer Oberseite jeweils eine Rastnase 36a, 36b, 36c, 36d auf, die von zwei schräg nach oben verlaufenden Flächen gebildet wird, die an einer Kante 37 zusammenlaufen, die radial zur Achse des Grundkörpers 22 verläuft. An seinem oberen Ende wird der Grundkörper 22 von einem Umfangsflansch 30 umgeben, an dessen Unterseite, wie in Fig. 3 gezeigt, ein elastischer Ring 38 anliegt, der den Grundkörper 22 umgibt. Anschließend an den Umfangsflansch 30 ist ein ergonomisch ausgebildeter Drehgriff 32 geformt.

Der Grundkörper 22 ist mit den Rastvorsprüngen 34a, 34b, 34c, 34d, den Rastnasen 36a, 36b, 36c, 36d sowie dem Umfangsflansch 30 und dem Drehgriff 32 einteilig als Spritzgussteil hergestellt.

Zur Befestigung des Führungselements 20 an der Trägerplatte 10 wird das Führungselement 20 so eingesetzt, dass die Rastvorsprünge 34a, 34b, 34c, 34d in die Radialausnehmungen 14a, 14b, 14c, 14d eingreifen. Anschließend wird das Führungselement 20 so weit nach unten verschoben, bis sich die Rastvorsprünge unterhalb der Trägerplatte 10 befinden. Anschließend wird das Führungselement 20 um 45° um seine Längsachse verdreht, wodurch die Rastnasen 36a, 36b, 36c, 36d in Eingriff mit den Rastschlitzen 16a, 16b, 16c, 16d kommen, wodurch eine Drehsicherung geschaffen wird. Der Abstand zwischen dem Umfangsflansch 30 und den Rastvorsprüngen 34a, 34b, 34c, 34d ist so gewählt, dass das Eingreifen der Rastnasen 36a, 36b, 36c, 36d in die Rastschlitze 16a, 16b, 16c, 16d mittels einer geringfügigen elastischen Verformung der Rastnasen 36a, 36b, 36c, 36d möglich ist. Diese Elastizität kann aber auch durch den Ring 38 bereitgestellt werden, wobei in diesem Fall keine Verformung der Rastnasen 36a, 36b, 36c, 36d stattfinden muss.

Zur Demontage des Führungselements 20 wird das Führungselement 20 wieder um 45° verdreht, bis die Rastvorsprünge 36a, 36b, 36c, 36d mit entsprechenden Radilausnehmungen 14a, 14b, 14c, 14d fluchten, so dass das Führungselement 20 wieder nach oben herausgezogen werden kann.

## Patentansprüche

1. Druckvorrichtung zur Klemmung von Teilen insbesondere in Stanzautomaten mit
- einer Trägerplatte (10), an der wenigstens ein Führungselement (20) anbringbar ist, in dem eine vorgespannte Schubstange (24) längs ihrer Achse verschiebbar geführt ist, wobei
- die Schubstange (24) gegenüber dem Führungselement (20) vorgespannt ist, und
- das Führungselement (20) einen zylindrischen Grundkörper (22) aufweist, von dem sich ein Umfangsflansch (30) radial nach außen erstreckt,
**dadurch gekennzeichnet, dass**
- sich von dem Grundkörper (22) mehrere Radialvorsprünge (34) in einer Radialebene nach außen erstrecken, die in axialem Abstand zu dem Umfangsflansch (30) liegt,
- der axiale Abstand zwischen Umfangsflansch (30) und Radialvorsprüngen (34) im Wesentlichen der Dicke der Trägerplatte (10) entspricht,
- in der Trägerplatte (10) eine Durchgangsöffnung (12) ausgebildet ist, die eine insgesamt zylindrische Innenfläche aufweist, von der sich Radialausnehmungen (14) radial nach außen erstrecken, durch die jeweils ein Radialvorsprung (34) beim Einsetzen des Grundkörpers (22) in die Durchgangsöffnung (12) hindurchgeht, so dass das Führungselement (20) nach Einsetzen des Grundkörpers (22) in die Durchgangsöffnung (12) durch Drehung um seine Längsachse in Art eines Bajonettverschlusses an der Trägerplatte (10) befestigbar ist,
- an den Radialvorsprüngen (34) sich in Richtung des Umfangsflansches erstreckende Rastnasen (36) ausgebildet sind und dass auf einer Seite der Trägerplatte (10) Rastaussparungen (16) zwischen den Radialausnehmungen (14) ausgebildet sind, in die die Rastnasen (36) eingreifen können, und
- angrenzend an den Umfangsflansch (30) ein elastischer Ring (38) auf dem Grundkörper (22) angeordnet ist.

2. Druckvorrichtung nach einem der vorhergehenden Ansprüche, **dadurch gekennzeichnet, dass** ein Drehgriff (32) an der dem Grundkörper (22) abgewandten Seite des Umfangsflansches (30) vorgesehen ist.

3. Druckvorrichtung nach Anspruch 1 oder 2, **dadurch gekennzeichnet, dass** ein Drehgriff an der dem Grundkörper abgewandten Seite der Radialvorsprünge vorgesehen ist.

4. Druckvorrichtung nach einem der vorhergehenden Ansprüche, **dadurch gekennzeichnet, dass** in dem Umfangsflansch Axialbohrungen diametral gegenüberliegend ausgebildet sind, die zur Aufnahme von Stiften eines Montagewerkzeugs dienen.

## Claims

1. A pressure device for clamping parts, in particular in automatic punching machines, comprising
- a carrier plate (10), at which at least one guide element (20) can be mounted, in which a biased pressure rod (24) is guided slidably along its axis, wherein
- the pressure rod (24) is biased with respect to the guide element (20), and
- the guide element (20) has a cylindrical base body (22), from which a circumferential flange (30) extends radially outwardly,
**characterized in that**
- a plurality of radial projections (34) extend outwardly from the base body (22) in a radial plane located at an axial distance from the circumferential flange (30),
- the axial distance between the circumferential flange (30) and the radial projections (34) essentially corresponds to the thickness of the carrier plate (10),
- a through-hole (12) is formed in the carrier plate (10) and has a generally cylindrical inner surface, from which radial recesses (14) extend radially outwardly, wherein each of the radial projections (34) passes through one of the radial recesses (14) during insertion of the base body (22) in the through-hole (12), so that after insertion of the base body (22) in the through-hole (12) the guide element (20) can be attached at the carrier plate (10) by rotation about its longitudinal axis in the manner of a bayonet joint,
- locking noses (36) extending towards the circumferential flange are formed at the radial projections (34) and that locking recesses (16) are formed at a side of the carrier plate (10) between the radial recesses (14), in which the locking noses (36) are able to engage, and
- a resilient ring (38) is arranged on the base body (22) adjacent the circumferential flange (30).

2. The pressure device according to one of the preceding claims, **characterized in that** a turning handle (32) is provided at the side of the circumferential flange (30) facing away from the base body (22).

3. The pressure device according to claims 1 or 2, **characterized in that** a turning handle is provided at the side of the radial projections facing away from the base body.

4. The pressure device according to one of the preceding claims, **characterized in that** diametrically opposing axial bores are formed in the circumferential flange, which serve to receive pins of an assembly tool.

## Revendications

1. Dispositif de pression destiné au serrage de pièces en particulier dans des presses automatiques à estamper comprenant
- une plaque support (10), sur laquelle au moins un élément de guidage (20) peut être placé, dans lequel une barre de poussée (24) précontrainte est guidée de façon coulissante le long de son axe,
- la barre de poussée (24) étant précontrainte par rapport à l'élément de guidage (20), et
- l'élément de guidage (20) présentant un corps de base (22) cylindrique, à partir duquel une bride périphérique (30) s'étend radialement vers l'extérieur,
**caractérisé en ce que**
- plusieurs saillies radiales (34) s'étendent à partir du corps de base (22) dans un plan radial vers l'extérieur, lequel est situé à distance axiale de la bride périphérique (30),
- la distance axiale entre la bride périphérique (30) et des saillies radiales (34) correspond sensiblement à l'épaisseur de la plaque support (10),
- une ouverture de passage (12) est conçue dans la plaque support (10), laquelle ouverture présente une surface intérieure globalement cylindrique, à partir de laquelle des cavités radiales (14) s'étendent radialement vers l'extérieur, par chacun desquelles passe une saillie radiale (34) lors de l'insertion du corps de base (22) dans l'ouverture de passage (12), de sorte que l'élément de guidage (20) peut être fixé sur la plaque support (10) à la façon d'une fermeture à baïonnette après l'insertion du corps de base (22) dans l'ouverture de passage (12) par rotation autour de son axe longitudinal,
- des nez d'encliquetage (36) s'étendant en direction de la bride périphérique sont formés sur les saillies radiales (34) et **en ce que** des évidements d'encliquetage (16) sont réalisés sur un côté de la plaque support (10) entre les cavités radiales (14), dans lesquelles les nez d'encliquetage (36) peuvent s'engager, et
- une bague (38) élastique est disposée sur le corps de base (22) de façon contiguë à la bride périphérique (30).

2. Dispositif de pression selon l'une quelconque des revendications précédentes, **caractérisé en ce qu'**une poignée tournante (32) est prévue sur le côté, opposé au corps de base (22), de la bride périphérique (30).

3. Dispositif de pression selon la revendication 1 ou 2, **caractérisé en ce qu'**une poignée tournante est prévue sur le côté, opposé au corps de base, des saillies radiales.

4. Dispositif de pression selon l'une quelconque des revendications précédentes, **caractérisé en ce que** des perçages axiaux, qui servent au logement de goupilles d'un outil de montage, sont conçus de façon diamétralement opposée dans la bride périphérique.
